# FASCICULE DE BREVET EUROPEEN

(11) **EP 0 504 038 B1**
(45) Date de publication et mention de la délivrance du brevet: **27.09.1995**
(21) Numéro de dépôt: 92400620.8
(22) Date de dépôt: 10.03.1992
(51) Int. Cl.: B01D 29/21

(54) **Cartouches de filtration comprenant un élément filtrant constitué par une feuille plissée**
Filterkartuschen mit plissiertem Filterelement
Filter cartridges with pleated filter element

(30) Priorité: 13.03.1991 FR 9103038
(43) Date de publication de la demande: 16.09.1992
(73) Titulaire: FILTRAUTO, F-78180 Montigny le Bretonneux (FR)
(72) Inventeur: Pages, Jean, F-93800 Epinay-sur-Seine (FR)
(74) Mandataire: Jacquelin, Marc-Henri

(56) Documents cités:
- DE-A- 1 536 865
- DE-A- 1 949 823
- FR-A- 2 175 901
- FR-A- 2 267 818
- GB-A- 1 408 804

## Description

L'invention concerne les cartouches de filtration pour fluides pollués (tels que huile, carburant, air d'alimentation d'un moteur à combustion interne) comprenant un élément filtrant tubulaire délimité intérieurement et extérieurement par deux surfaces cylindriques à génératrices parallèles reliant entre elles deux faces planes annulaires transversales, élément constitué par une feuille plissée perméable au fluide à filtrer et non aux impuretés à séparer.

Dans les modes de réalisation actuels desdites cartouches, la surface cylindrique délimitant intérieurement l'élément filtrant est en général de révolution comme la surface cylindrique extérieure et le plissage de la feuille filtrante est généralement effectué en accordéon, c'est-à-dire avec alternance du pliage selon des sens opposés, autour d'arêtes de pliage rectilignes parallèles aux génératrices ci-dessus, les tronçons plans ou pans de feuille filtrante pliée s'étendant selon des directions radiales ou peu inclinées sur des rayons de l'élément tubulaire et se succédant selon la direction circonférentielle de cet élément.

Le serrage de ces plis est limité par la longueur circonférentielle du cercle directeur du cylindre délimitant intérieurement l'élément tubulaire.

Au niveau de ce cylindre, les pans de feuille filtrante sont quasiment jointifs, étant juste séparés les uns des autres par le jeu nécessaire pour livrer passage au fluide filtré ou à filtrer.

Comme le nombre et donc l'épaisseur totale de feuilles composant l'élément filtrant sont les mêmes à tous les niveaux radiaux de cet élément, et comme la longueur du cercle directeur définissant le cylindre extérieur de l'élément tubulaire est supérieure à celle du cercle directeur définissant son cylindre intérieur, les plis sont moins serrés vers l'extérieur et sont donc séparés mutuellement par des espaces relativement larges : la largeur de ces espaces est supérieure à celle simplement nécessaire au passage du fluide et il en résulte un manque à gagner pour le rendement de la filtration par unité de volume de l'élément filtrant.

Pour remédier à cet inconvénient, c'est-à-dire augmenter le degré de remplissage par la feuille filtrante plissée du volume global occupé par l'élément filtrant tubulaire, il a déjà été proposé d'ajouter des plis plus petits entre certains des plis normaux, dans les portions, de l'élément, les plus proches de sa face cylindrique extérieure, la section droite de l'ensemble des plis se présentant alors sous la forme d'une succession annulaire de M reliés entre eux deux à deux par les bases de leurs ailes adjacentes (voir brevet FR-1 594 622).

La performance filtrante des éléments de ce type, pour un volume donné de ces éléments, est supérieure à celle des éléments correspondants présentant un plissage simple en accordéon.

Mais dans les modes de réalisation connus de ces éléments, les plis de la feuille filtrante sont droits, c'est-à-dire exécutés le long d'arêtes rectilignes parallèles aux génératrices des surfaces cylindriques définissant les faces intérieures et extérieures desdits éléments.

Or il a été proposé également d'améliorer les éléments filtrants du genre ci-dessus, c'est-à-dire présentant un plissage simple en accordéon, en plissant la feuille filtrante selon des plis qui ne sont plus droits, mais qui s'étendent selon des lignes brisées en zigzag : la feuille filtrante est alors plissée selon deux directions perpendiculaires entre elles, savoir non plus seulement selon la direction circonférentielle de l'élément filtrant, mais aussi selon sa direction axiale.

Un tel plissage double, dit "chevronné" permet de régler le degré de remplissage en feuille filtrante du volume disponible pour celle-ci, en modifiant le degré de serrage des plis, c'est-à-dire le nombre de ces plis contenu dans une longueur donnée, non seulement selon la direction circonférentielle, comme dans le cas du plissage droit, mais aussi selon la direction axiale le document DE-A-1536865 concerne un tel plissage dense dont les arêtes des plis sont imbriquées.

La performance filtrante des éléments de ce dernier type, pour un volume donné de ces éléments, est, ici encore, améliorée par rapport à celle des éléments présentant un plissage simple en accordéon à plis droits.

Chacune des deux caractéristiques exposées ci-dessus permet donc d'améliorer le remplissage du volume d'un élément filtrant en feuille filtrante, et donc sa performance de filtration pour un volume donné.

Jusqu'à ce jour, ces deux caractéristiques avaient été seulement mises en oeuvre indépendamment l'une de l'autre.

On pouvait penser en effet qu'elles s'excluaient mutuellement et que les accroissements cumulés de matériau filtrant dus aux deux types de plissage complémentaire considérés aboutiraient à des bourrages préjudiciables à la filtration.

La demanderesse a eu l'idée de combiner les deux caractéristiques en question et elle a constaté que le préjugé ci-dessus mentionné n'était pas justifié dans la pratique et qu'au contraire la performance filtrante obtenue pour la cartouche correspondante était améliorée par rapport à chacune des deux solutions précédentes considérée isolément.

Plus précisément, les éléments filtrants du genre en question selon l'invention sont essentiellement caractérisés :
- en ce que, d'une part, la section droite de l'ensemble de leurs plis se présente sous la forme d'une succession annulaire de M reliés entre eux deux à deux par les bases de leurs ailes adjacentes,
- et en ce que, d'autre part, les arêtes des plis s'étendent selon des lignes brisées en zigzag imbriquées dont les segments se raccordent selon des angles aigus compris entre 60 et 90 degrés. Dans des modes de réalisation préférés, on a recours en outre à l'une et/ou à l'autre des dispositions suivantes :
- des bossages ou autres reliefs sont prévus sur la feuille filtrante de façon à maintenir les pans adjacents de cette feuille, après son plissage, suffisamment écartés les uns des autres pour assurer une bonne circulation du fluide entre ces pans,
- l'élément filtrant est délimité intérieurement et extérieurement par deux surfaces cylindriques de révolution coaxiales et le rapport entre le diamètre de la surface extérieure et celui de la surface intérieure est de l'ordre de 3,
- la feuille filtrante est constituée en un papier dont l'épaisseur est de l'ordre de 0,5 mm, c'est-à-dire comprise entre 0,4 et 0,6 mm.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en perspective, portions arrachées, une cartouche filtrante établie selon l'invention si l'on excepte le valeur de l'angle α.

La figure 2 montre en partie une coupe transversale de cette cartouche.

Ladite cartouche, destinée en général à filtrer l'huile de lubrification d'un moteur à combustion interne, mais utilisable également pour filtrer d'autres fluides tels que le carburant liquide ou l'air alimentant un moteur du genre ci-dessus, comprend, d'une façon connue en soi :
- un élément filtrant 1 tubulaire et de révolution autour d'un axe X, élément constitué en papier poreux plissé,
- et deux flasques transversaux ou rondelles 2 d'axe X coiffant respectivement les deux extrémités axiales de l'élément 1 et fixés de façon étanche sur ces deux extrémités, généralement par collage.

C'est essentiellement le plissage du papier constitutif de l'élément 1 qui fait l'objet de la présente invention.

Ce plissage est déductible du plissage classique en accordéon étoilé à plis droits par deux plissages complémentaires exécutés respectivement selon la direction circonférentielle et selon la direction axiale de l'élément filtrant.

On rappelle que le plissage classique en accordéon étoilé à plis droits correspond à un plissage du papier selon des arêtes de pliage rectilignes parallèles à l'axe X, exécuté à tour de rôle selon des sens inverses, chaque arête de pliage raccordant entre eux deux tronçons ou "pans" de papier plans et rectangulaires, les plans bissecteurs des dièdres constitués par les pans successifs comprenant tous l'axe X et étant donc tous orientés radialement autour de cet axe X.

Le premier plissage additionnel qui est exécuté sur cette structure en accordéon étoilé concerne la zone périphérique de l'élément filtrant.

Chacun des plis en V occupant cette périphérie dans la structure plissée en accordéon antérieure est ici remplacé par un pli en W, la hauteur du pli inversé médian de chaque W étant inférieure à celle de ses ailes latérales, et notamment de l'ordre de la moitié de cette dernière.

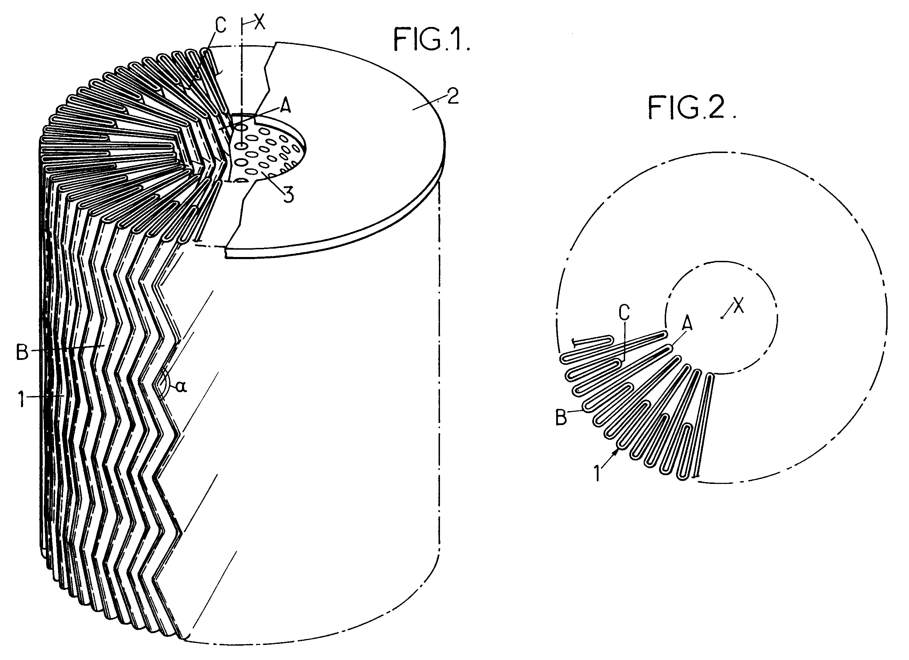

On voit clairement sur la figure 2 que cette mesure permet d'augmenter le remplissage en papier de la zone périphérique de l'élément filtrant : en définitive, cette zone périphérique comprend plus de papier par unité de volume que la zone intérieure dudit élément, contrairement à ce que l'on observait dans la structure antérieure.

Alors que ce premier plissage additionnel est exécuté selon la direction circonférentielle de la cartouche, le second plissage additionnel est effectué selon la direction longitudinale de celle-ci.

Ce dernier plissage consiste à donner aux arêtes des différents plis, non plus la forme de droites parallèles à l'axe, comme dans les cartouches connues à plis droits, mais la forme de lignes brisées en zigzag, comme connu dans les cartouches filtrantes présentant un plissage à chevrons.

On voit en A et en B sur la figure 1 deux telles arêtes s'étendant respectivement dans les surfaces cylindriques intérieure et extérieure de l'élément filtrant.

On voit également en C une arête intermédiaire correspondant au pli inversé médian d'un plissage intermédiaire en W ou en M.

Chacune de ces arêtes brisées A, B et C est composée d'une suite de segments de droite se raccordant les uns aux autres selon des angles α.

Ces différents segments ont des longueurs identiques et les angles α ont tous également des valeurs identiques tout en étant alternativement de sens contraires.

La valeur de l'angle α est comprise entre 60 et 90 degrés, étant de préférence de l'ordre de 80 degrés.

En outre toutes les arêtes des lignes brisées A, B et C sont identiques entre elles.

Comme visible sur la figure 1, les différentes arêtes de chacune de ces trois familles sont pratiquement adjacentes et imbriquées les unes dans les autres.

Il est à noter que la surface plissée de l'élément filtrant ci-dessus décrit est développable et peut donc être obtenue par simple plissage d'une feuille initialement plane.

Il est à noter en outre que, si le degré de serrage mutuel des plis, et donc les angles de pliage correspondants, est déterminé une fois pour toutes, pour un élément filtrant tubulaire donné, selon la direction circonférentielle, il n'en est pas de même selon la direction axiale : il est en effet facile de modifier à volonté le degré de serrage mutuel des plis, et donc les angles de pliage correspondants, selon cette direction axiale, en rapprochant ou écartant mutuellement les deux extrémités axiales de l'élément selon ladite direction axiale.

On peut ainsi régler dans chaque cas le degré de remplissage du volume intérieur de la cartouche filtrante en matériau filtrant de façon à obtenir le rendement de filtration optimum.

Des bossages ou autres reliefs (non représentés) sont avantageusement prévus sur la feuille filtrante de façon que lors de l'application des divers pans de cette feuille les uns contre les autres, il demeure entre eux un espace suffisant pour assurer une libre circulation du fluide à filtrer ou du fluide filtré.

La feuille filtrante est avantageusement constituée en un papier dont l'épaisseur est généralement comprise entre 0,2 et 1,2 mm, cette épaisseur étant de préférence de l'ordre du demi-millimètre, c'est-à-dire comprise entre 0,4 et 0,6 mm.

Le rapport entre les diamètres des deux surfaces cylindriques de révolution délimitant intérieurement et extérieurement l'élément filtrant 1 est de préférence de l'ordre de 3.

Sur la figure 1, on voit en 3 une cloison métallique cylindrique perforée qui longe la face intérieure de l'élément filtrant, éventuellement à une petite distance radiale de cette face, et qui définit la dimension axiale dudit élément en formant entretoise entre les deux flasques annulaires d'extrémité 2 : ces flasques sont appliqués axialement contre les deux tranches terminales axiales de ladite cloison 3.

Cette cloison est dessinée de façon à faire communiquer avec l'intérieur de la cartouche filtrante la totalité des espaces compris entre les grandes jambes des M constitutifs de la feuille plissée.

En suite de quoi et quel que soit le mode de réalisation adopté, on dispose finalement d'une cartouche filtrante dont la constitution résulte suffisamment de ce qui précède.

Cette cartouche présente de nombreux avantages par rapport à celles antérieurement connues, notamment en ce qui concerne le rendement élevé de la filtration pour un volume donné global de la cartouche, vu la forte densité du "remplissage" en papier plissé du volume global disponible pour l'élément filtrant tubulaire.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, les variante suivantes:
- celles où la surface cylindrique délimitant extérieurement l'élément filtrant 1 ne serait pas de révolution et admettrait comme directrice une courbe fermée autre qu'un cercle, cette courbe étant notamment elliptique ou ovale,
- celles où l'une au moins des faces transversales terminales de l'élément filtrant ne serait pas recouverte jointivement par un flasque, la fermeture désirable de certains des plis au niveau desdites faces pouvant être obtenue à l'aide de cordons de colle (non représentés) localisés au niveau des tranches de ces plis, lesdits cordons pouvant être formés isolément ou faire partie d'une galette de colle durcie,
- et celles où le matériau constitutif des feuilles filtrantes serait autre qu'un papier, étant par exemple un non-tissé, un feutre ou encore une toile métallique ou plastique, ou même une feuille perforée.

## Revendications

1. Cartouche de filtration comprenant un élément filtrant tubulaire (1) délimité intérieurement et extérieurement par deux surfaces cylindriques à génératrices parallèles reliant entre elles deux faces planes annulaires transversales (2), élément constitué par une feuille filtrante plissée, les arêtes (A,B,C) des plis s'étendant selon des lignes brisées en zigzag imbriquées composées chacune par une suite de segments de droite de longueurs identiques se raccordant les uns aux autres selon des angles aigus (α) compris entre 60 et 90 degrés, caractérisée en ce que la section droite de l'ensemble des plis de la feuille, considérée selon un plan perpendiculaire à l'axe (X) de la cartouche, se présente sous la forme d'une succession annulaire de M reliés entre eux deux à deux par les bases de leurs ailes adjacentes, bases situées du côté dudit axe.

## Claims

1. Filter cartridge comprising a tubular filter element (1) delimited on the inside and outside by two cylindrical surfaces with parallel generators connecting together two transverse annular plane faces (2), an element made up of a pleated filter sheet, the ridges (A, B, C) of the pleats lying along interleaved broken zigzag lines each made up of a series of straight line segments identical in length joined to one another at acute angles (α) of between 60 and 90°, characterized in that the cross section of all the pleats of the sheet, considered in a plane perpendicular to the axis (X) of the cartridge, is in the form of an annular series of Ms joined to each other in pairs at the bases of their adjacent wings, the bases being situated on the said axis side.

## Patentansprüche

1. Filterpatrone, die aus einem rohrförmigen Filterelement (1) besteht, das innen und außen durch zwei zylindrische Oberflächen mit parallelen Erzeugenden begrenzt wird, die zwei ebene, in Querrichtung verlaufende Flächen (2) miteinander verbinden, wobei das Element aus einer gefalteten Filterfolie besteht und die Kanten (A, B, C) der Falten sich längs zickzackförmig gebrochener, verschachtelter Linien erstrecken, von denen jede aus einer Reihe von Abschnitten einer Geraden mit identischen Längen besteht, die unter spitzen Winkeln (α) zwischen 60 und 90° aneinander anschließen, dadurch gekennzeichnet, daß der gerade Abschnitt der Anordnung der Falten der Folie gemäß einer senkrecht zur Achse (X) der Patrone verlaufenden Ebene gesehen, in Form einer ringförmigen Aufeinanderfolge von M auftritt, die untereinander paarweise durch die Basen ihrer nebeneinanderliegenden Schenkel verbunden sind, wobei die Basen auf der Seite der Achse angeordnet sind.
